# EUROPEAN PATENT APPLICATION

(11) **EP 3 503 044 A1**
(43) Date of publication of application: **26.06.2019**
(21) Application number: 17306879.2
(22) Date of filing: 21.12.2017
(51) Int. Cl.: G07C 9/00, B60R 25/24

(54) **METHOD OF GETTING ACCESS TO A VEHICLE**

(71) Applicant: GEMALTO SA, 92190 Meudon (FR)
(72) Inventor: DELSUC, Julien, 13881 GEMENOS Cedex (FR); GUIGNARD, Philippe, 13881 GEMENOS Cedex (FR); QUIRICONI, Jean-Rémi, 13881 GEMENOS Cedex (FR)
(74) Representative: Grevin, Emmanuel

(57) **Abstract**

The invention is a method for accessing a vehicle (20) comprising a user interface (21), wherein
- in response to triggering of the user interface, a transmitter (22) starts broadcasting a signal comprising a one-time UWB MAC address enciphered with a first key (Kb) and a first UWB transmitter (23) starts,
- upon detection of the signal, an access device (10) deciphers the UWB MAC address using the first key and starts a second UWB transmitter (13), then the second UWB transmitter establishes a UWB session with the first UWB transmitter using the one-time UWB MAC address,
- then the second UWB transmitter sends to the first UWB transmitter an access request comprising an access token computed from a second key (Ka), the vehicle checks the received access token is genuine by using the second key and only in case of successful checking access to the vehicle is authorized.

## Description

### (Field of the invention)

The present invention relates to methods of getting access to a vehicle. It relates particularly to methods of managing access to a vehicle thanks to an access device.

### (Background of the invention)

Today several car key systems exist. Usually, the user must have the key in hand and activate a button. So-called keyless systems allow accessing cars without to bother with finding and activating the key fob. Such keyless systems tend to broadcast car identifier widely in order to wake up the key fob. This lead to issue on power consumption on car side. Moreover the broadcasting allows a malevolent person to track a car and is a breach in user privacy.

There is a need to manage access to vehicles in a manner that protect privacy, is convenient for the user and energy efficient.

### (Summary of the Invention)

The invention aims at solving the above mentioned technical problem.

The object of the present invention is a method for accessing a vehicle comprising a user interface. The method comprises the steps of:
- in response to triggering of the user interface, a transmitter comprised in the vehicle starts broadcasting a signal comprising a one-time UWB MAC address enciphered with a first key and a first UWB transmitter starts,
- upon detection of said signal, an access device deciphers the one-time UWB MAC address using said first key and starts a second UWB transmitter comprised in the access device, then the second UWB transmitter establishes a UWB session with the first UWB transmitter using the one-time UWB MAC address,
- then the second UWB transmitter sends to the first UWB transmitter an access request comprising an access token computed from a second key, the vehicle checks the received access token is genuine by using said second key and only in case of successful checking access to the vehicle is authorized.

Advantageously, the vehicle may evaluate a position of the access device relative to the vehicle using said first UWB transmitter and access to the vehicle may be authorized only if said position is located in a predefined area.

Advantageously, the method may comprise the previous steps of:
- switching both the access device and the vehicle in pairing mode,
- establishing an initial UWB session between the access device and the vehicle and sending an authentication message comprising a certificate from the access device to the vehicle through the initial UWB session,
- upon receipt of the authentication message, the vehicle checks that the certificate is genuine,
- the vehicle evaluates the difference between the positions of the access device and the vehicle,
- the vehicle sends a populating message comprising said first and second key in response to the authentication message only if said difference is less than a predefined threshold and if the certificate is genuine.

Advantageously, the certificate may comprise a validity date and the vehicle may associate the validity date to said first and second key.

Advantageously, the method may comprise the preliminary steps of:
- providing the access device with an identifier of the vehicle and an asymmetric key pair,
- sending from the access device to a server a certificate request comprising said identifier and a credentials based on the asymmetric key pair,
- checking the validity of the credentials on server side and sending the certificate in response to the certificate request only in case of successful credentials checking.

Another object of the invention is a vehicle comprising a user interface, a first transmitter, a UWB transmitter and an authenticator configured to provide the first transmitter with a one-time UWB mac address enciphered with a first key. Following an activation of the user interface, the vehicle is configured to start said UWB transmitter and to cause the first transmitter to start broadcasting a signal comprising the enciphered one-time UWB MAC address. The UWB transmitter is configured to receive through a UWB session established with said one-time UWB MAC address an access request comprising an access token computed from a second key. The authenticator is configured to check the received access token is genuine by using said second key and to authorize access to the vehicle only in case of successful checking.

Advantageously, the vehicle may be configured to evaluate a position of the access device relative to the vehicle using said UWB transmitter and the vehicle may be configured to authorize access to said vehicle only if said position is located in a predefined area.

Advantageously, the vehicle may be configured to switch in pairing mode in response to a specific activation of the user interface and the vehicle may comprise a pairing unit. Upon receipt from an access device of an authentication message comprising a certificate through a UWB session established using an initial UWB MAC address, the pairing unit may be configured to check that the certificate is genuine. The vehicle may be configured to evaluate the difference between the positions of the access device and the vehicle. The pairing unit may be configured to send a populating message comprising said first and second key in response to the authentication message only if said difference is less than a predefined threshold and if the certificate is genuine.

Advantageously, the certificate may comprise a validity date and the pairing unit may be configured to associate the validity date to said first and second key.

Another object of the invention is an access device comprising a user interface and able to control access to a vehicle. The access device comprises a low power transmitter, a UWB transmitter and a secure element. The secure element stores first and second symmetric keys and an unlocker agent which is configured to get a signal received by the low power transmitter, to decipher a one-time UWB MAC address extracted from said signal using said first key, to cause the UWB transmitter to establish a UWB session with a vehicle using the one-time UWB MAC address and to send an access request comprising an access token computed using said second key through the UWB session.

Advantageously, the access device may be configured to switch in pairing mode and to start the low power transmitter in response to an activation of the user interface. The secure element may comprise a pairing agent which is configured to, upon receipt of a signal containing an initial UWB MAC Address, start the UWB transmitter and to cause the UWB transmitter to establish an initial UWB session with a vehicle using the initial UWB MAC address and to send an Authentication message comprising a certificate through the initial UWB session. The pairing agent may be configured to receive in response to the Authentication message a populating message comprising said first and second keys.

Advantageously, the access device may comprise a registering agent configured to receive an identifier of the vehicle, to generate an asymmetric key pair and to send to a server a certificate request comprising both said identifier and a credentials based on the asymmetric key pair. The registering agent may be configured to receive, in response to the certificate request, a response message comprising a certificate and to associate said certificate to the identifier.

### (Brief description of the drawings)

Other characteristics and advantages of the present invention will emerge more clearly from a reading of the following description of a number of preferred embodiments of the invention with reference to the corresponding accompanying drawings in which:
- Figure 1 is an example of hardware architecture of a system comprising an access device and a vehicle according to the invention;
- Figure 2 is an example of hardware architecture of a secure element embedded in an access device according to the invention;
- Figure 3 is an example of sequence of enrollment of an access device according to the invention;
- Figure 4 is an example of sequence of pairing between an access device and a vehicle according to the invention; and
- Figure 5 depicts an example of access to a vehicle using an access device according to the invention.

### (Detailed description of the preferred embodiments)

The invention may apply to any type of vehicles whose access can be controlled by a distant access device. For example the vehicle may be a car, a truck, a plane, a helicopter, a bicycle, a scooter, a motorcycle, a snowmobile, a locomotive or a boat. It may also apply to robots, drones or autonomous vehicles.

A tamper-proof device, also called secure element, is a physical component able to store data and to provide services in a secure manner. In general, a tamper-proof device has a limited amount of memory, a processor with limited capabilities and is devoid of battery. For instance a UICC (Universal Integrated Circuit Card) is a tamper-proof device embedding SIM applications for telecommunication purposes. A tamper-proof device can be installed, fixedly or not, in a host device. In some cases, the host device is a machine that communicates with other machines for M2M (Machine to Machine) applications.

The access device of the invention comprises a tamper-proof device which may be an embedded secure element (eSE), an integrated secure element (iSE), a secure enclave, a smart card a Machine-To-Machine device for instance. An integrated secure element is a secure element integrated in a hardware element providing additional functionalities distinct from the features of the secure element.

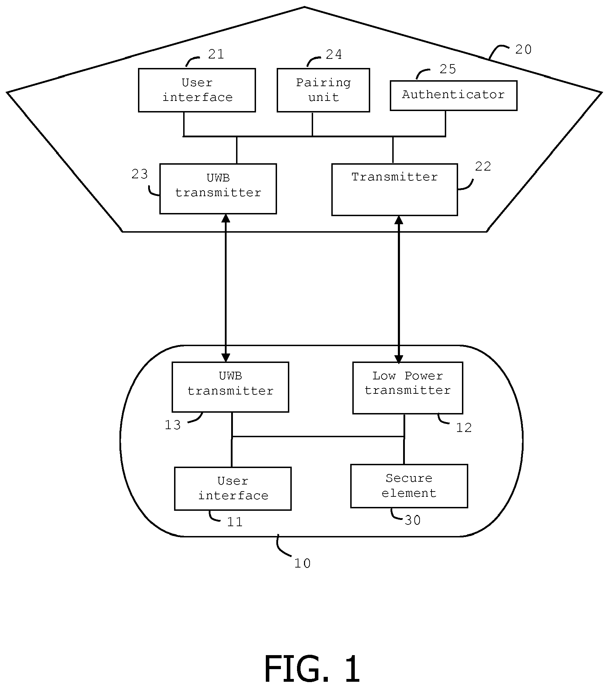

**Figure 1** shows an example of hardware architecture of a system comprising an access device and a vehicle according to the invention.

In this example, the vehicle 20 is a car comprising a user interface 21, an Ultra-Wide Band (UWB) transmitter 23, a transmitter 22, a Pairing unit 24 and an Authenticator 25.

The user interface 21 may include door handles and dashboard buttons/sliders. The transmitter 22 (also called broadcast transmitter) can be a Low Frequency transmitter like a RFID reader equipped with its antenna.

Alternatively, the transmitter 22 could a BCC (Body coupled communication) transmitter, an Ultra sound transmitter or an Infrared transmitter.

In all embodiments, the transmitter 22 is adapted to communicate with the low power transmitter 12 of the access device.

The Pairing unit 24 and the Authenticator 25 may be implemented as software components executed on an operating system of the vehicle 20. The Pairing unit 24 and the Authenticator 25 may also be implemented a hardware components or any combination of firmware and hardware elements.

It is to be noted that the Pairing unit 24 can be optional in the vehicle 20.

Preferably, the transmitter 22 is a Low Frequency emitter.

The authenticator 25 is adapted to provide the transmitter 22 with a one-time UWB mac address enciphered with a symmetric key Kb.

In response to an activation of the user interface 21, the vehicle 20 is configured to start the UWB transmitter 23 and to cause the transmitter 22 to start broadcasting a signal comprising the enciphered one-time UWB MAC address. In one embodiment, the user interface 21 directly sends messages to both the UWB transmitter 23 and the transmitter 22. Alternatively, the user interface 21 triggers the authenticator 25 which in turn sends messages to both the UWB transmitter 23 and the transmitter 22.

The UWB transmitter 23 is adapted to receive, through a UWB session established with said one-time UWB MAC address, an access request comprising an access token computed from a second key Ka. The UWB transmitter 23 is designed to provide the Authenticator 25 with the received access token. The Authenticator 25 is adapted to check that the received access token is genuine by using said second key Ka and to authorize access to the vehicle 20 only in case of successful checking.

The UWB transmitter 23 is configured to deny any further attempts using one-time UWB MAC address once the one-time UWB MAC address has been used.

Keys Ka and Kb are assumed to be symmetric keys which are stored in both the vehicle 20 and the access device 10.

In the present document, the term "access" may cover the unlocking of access doors, the unlocking of a feature of the vehicle or both. For instance, the Authenticator 25 may authorize the engine of the car to start.

Preferably, the vehicle 20 is adapted to evaluate a position of the access device 10 relative to the vehicle using the UWB transmitter 23.

UWB is defined by IEEE 802.15.4a standard. Unlike Conventional radio transmissions systems, UWB transmits information by generating radio energy at specific time intervals and occupying a large bandwidth, thus enabling pulse-position or time modulation. An important aspect of UWB technology is the ability to wirelessly communicate through user's body, clothes or bags. In other words, user's body, clothes or bags do not constitute a barrier to UWB communication.

Another important aspect of UWB technology is the ability for a UWB radio system to measure the distance between two communicating objects and to detect the position of a communicating object relative to another communicating object with an accurate precision.

The vehicle 20 is also adapted to authorize access to the vehicle 20 only if the position is located in a predefined area. For instance, a car may be configured to check that the access device 10 (supposed to be in the pocket/hand of the user) is located near a door handle before authorizing the opening of a door. In another example, a car may be configured to check that the access device 10 is located far enough away from the car before authorizing the car to move/park autonomously.

In the example of Figure 1, the access device 10 is a key fob comprising a user interface 11, a UWB transmitter 13, a Low Power transmitter 12 and a secure element 30.

The user interface 11 may be a push button. The transmitter 22 can be a RFID transponder equipped with its antenna.

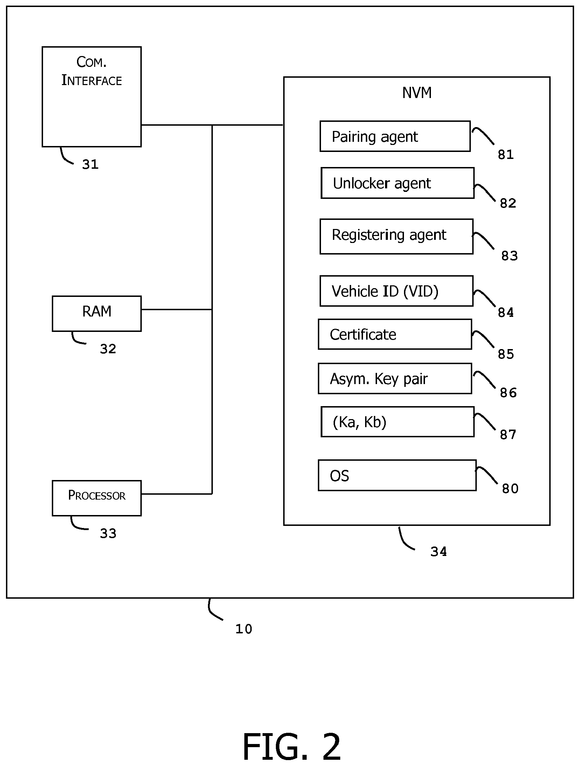

**Figure 2** shows an example of hardware architecture of a secure element 30 embedded in an access device 10 according to the invention.

The secure element 30 is a tamper-proof device welded to the access device 10. For instance the secure element 30 may be a chip embedded in a key fob. The secure element 30 comprises a processor 33, a working memory 32, a nonvolatile memory 34 and a communication interface 31.

The working memory 32 may be a RAM and the nonvolatile memory 34 may be a flash memory. The communication interface 31 is designed to convey data with other components of the access device 10. For instance, the communication interface 31 may allow the secure element to communicate with the UWB transmitter 13, the Low Power transmitter 12 and the user interface 11.

The nonvolatile memory 34 comprises the operating system 80 of the secure element, a pairing agent 81, a unlock agent 82, a registering agent 83, a Vehicle identifier 84 (also named VID), a Certificate 85, an asymmetric key pair 86 and two symmetric keys 87 (Ka and Kb).

It is to be noted that the Pairing agent 81 and the Registering agent 83 can be optional in the secure element 30. The secure element 30 can be pre-personalized with the VID and the relevant symmetric keys 87.

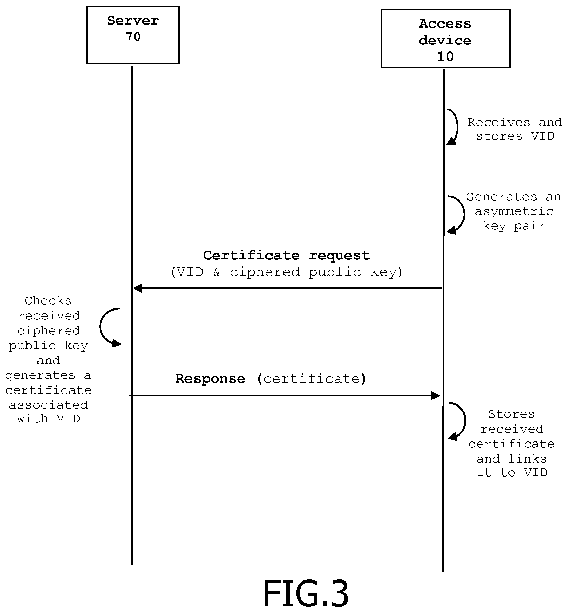

**Figure 3** shows an example of sequence of enrollment of an access device according to the invention.

In this example, the access device is similar to the one described at Figure 1.

The access device 10 may be a vanilla device which is not customized for a specific vehicle. When the need to associate the access device 10 with the vehicle 20 comes to light, the Vehicle identifier (VID) 84 is provided to the access device 10 which permanently stores it. The sending of the VID may be performed through an intermediate machine like a phone, a PC or any computer configured to communicate with both the server and the access device. For example the access device may communicate with the intermediate machine using RFID, UWB or Bluetooth Low Energy ©.

The registering agent 83 generates an asymmetric key pair 86 (a public key + a corresponding private key). Alternatively, the asymmetric key pair 86 may be generated by an external entity and sent securely to the access device 10.

The registering agent 83 generates a Certificate request which comprises the VID and credentials based on the asymmetric key pair 86. Then the registering agent 83 sends the Certificate request to a server 70. The server may be a computer machine reachable though the Internet or a wireless communication network for example.

The communication between the access device and the server may be done through a gateway, or a phone used as a gateway. The communication between the gateway and the server may be done through HTTPS. The user must be authenticated as owner of the car on the server through login/password for example.

Preferably, the credentials are signed with the private key (a hash of the request is computed and enciphered with the private key).

Upon receipt of the Certificate request, the server 70 checks the validity of the received credentials and sends a response comprising a certificate 85 only if the credentials is considered as valid.

For instance, the server 70 may check the signature of the certificate request: it deciphers the ciphered hash thanks to the public key and verify it is the actual hash of the received request.

The certificate request shall contain several attributes such as: identifier of the access device, public key, user identity, expiration date and vehicle identifier, that will be then also stored in the generated certificate.

In case of successful checking of the received credentials, the server generates a certificate 85 with the VID and other attached attributes. Similarly, the registering agent 83 stores the received certificate 85 and associates it with the VID. It is to be noted that the access device 10 may stores several certificates associated with as many vehicles.

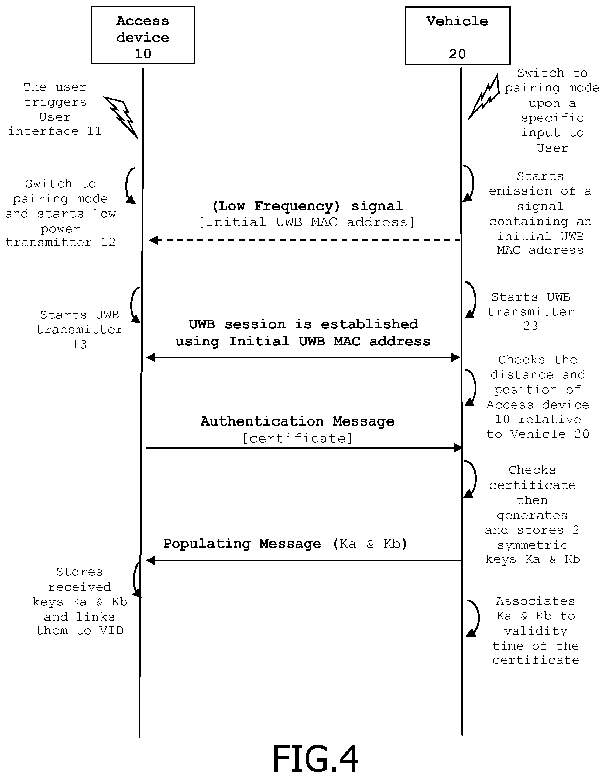

**Figure 4** shows an example of sequence of pairing between an access device and a vehicle according to the invention.

In this example, the access device 10 and the vehicle 20 are similar to those described at Figure 1. The access device 10 is assumed to have been initialized and enrolled as described at Figure 3.

For starting the pairing phase, the user voluntary switches the vehicle 20 in pairing mode. Typically, this operation is made by carried out by providing a specific input to the user interface 21. For example, a slider of the dashboard is set to a specific position.

Similarly, the user voluntary switches the access device 10 in pairing mode by triggering the user interface 11. For example, the user may push a button three times in a row.

Upon detection of the activation of the pairing mode, the pairing unit 24 of the vehicle 20 causes the transmitter 22 to emit a signal comprising an initial UWB MAC address and the UWB transmitter 23 to start. From this time, the UWB transmitter 23 is waiting for a connection attempt with the initial UWB MAC address.

Upon detection of the activation of the pairing mode, the pairing agent 81 of the access device 10 starts the Low Power transmitter 12. Hence the Low Power transmitter 12 receives the signal comprising the initial UWB MAC address. Upon receipt of the signal, the access device causes the UWB transmitter 13 to start and to establish an initial UWB session with the UWB transmitter 23 using the received initial UWB MAC address.

Then the pairing agent 81 causes the UWB transmitter 13 to send an Authentication message comprising the certificate 85 through the initial UWB session.

The pairing unit 24 retrieves the certificate 85 thanks to the UWB transmitter 23 and checks the validity of the certificate.

Usual checking methods can be implemented for the certificate validity check. For instance, it may ask the access device to prove it owns the private key through the ciphering of a challenge.

In case of successful checking of the certificate (i.e. certificate is found to be genuine), the pairing unit 24 generates and stores the two symmetric keys Ka and Kb. Preferably, it associates the symmetric keys Ka and Kb to a validity time extracted from the certificate 85.

Then the pairing unit 24 sends a populating message comprising these symmetric keys Ka and Kb through the initial UWB session. Hence, the pairing agent 81 retrieves the symmetric keys Ka and Kb, stores them and associate them to the VID.

The content of the populating message is protected thanks to usual security mechanisms. For example, the symmetric keys may be enciphered with the public key of the access device 10.

Advantageously, the pairing unit 24 may also check the distance or position of the access device 10 relative to the vehicle 20 thanks to the UWB transmitter 23. The pairing unit 24 may be configured to stop the pairing process if the access device 10 is located outside a predefined area. For example, the pairing process may be authorized only when the access device is located inside the vehicle 20 or located on the right side of the vehicle 20. The pairing process may also be authorized only if the distance between the access device 10 and the front of the vehicle 20 is less than 1 meter.

At the end of the pairing process, the secure element 30 comprises all data as shown at Figure 2.

Preferably, at the end of the pairing process, the transmitter 22 is stopped as well as both UWB transmitters 23 and 13.

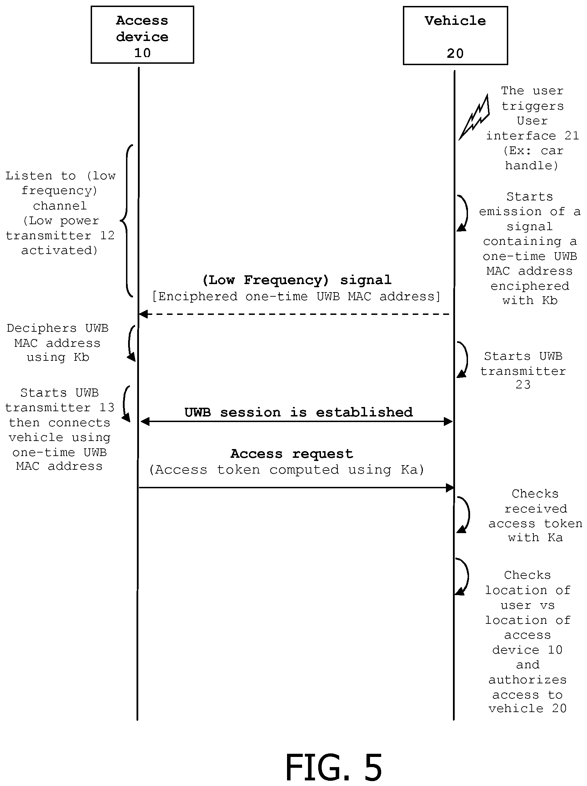

**Figure 5** shows an example of access to a vehicle using an access device according to the invention.

In this example, the access device 10 and the vehicle 20 are similar to those described at Figure 1 and are assumed to have been paired as described at Figure 4.

For requesting access to the vehicle 20, the user voluntary triggers the user interface 21. For example, the user can touch a door handle or another part of the car. The user may also pronounce a word, a sound or a phrase to trigger the user interface 21 assuming it has a sound sensor.

In response to the triggering of the user interface 21, the authenticator 25 of the vehicle 20 causes the transmitter 22 to start and to emit a signal comprising a one-time UWB MAC address enciphered with the symmetric key Kb. The authenticator 25 also causes the UWB transmitter 23 to start. From this time, the UWB transmitter 23 is waiting for a connection attempt with the one-time UWB MAC address.

Preferably, the one-time UWB MAC address is generated into the vehicle 20.

The Low Power transmitter 12 of the access device 10 is assumed to remain permanently active as a receiver (listener).

Upon receipt of the signal, the unlocker agent 82 of the access device 10 retrieves the one-time UWB MAC address by deciphering it with the symmetric key Kb. Then the unlocker agent 82 causes the UWB transmitter 13 to starts and to establish a UWB session with the UWB transmitter 23 using the received one-time UWB MAC address.

Preferably, as soon as the UWB session is established, the transmitter 22 is stopped to save energy.

Then the unlocker agent 81 causes the UWB transmitter 13 to send - through the current UWB session - an Access request comprising an access token computed from the asymmetric key ka. For instance, the access token may be a short message containing the identifier of the access device and an action such as "open door" or "start engine". The access token may be partially enciphered with Ka or signed with Ka.

The authenticator 25 retrieves the access token thanks to the UWB transmitter 23 and checks the genuineness of the access token using the symmetric key Ka by deciphering it with the key Ka or verifying its signature.

Preferably, the authenticator 25 checks the validity date associated to the key Ka and denies the access to the vehicle if the key Ka is considered as no more valid.

It is to be noted that the use of symmetric keys for managing security of the access request is time-efficient because involved computations are quickly executed. (in particular by comparison with asymmetric keys.)

In case of successful checking of the access token (i.e. access token is found to be genuine), the authenticator 25 authorizes access to the vehicle 20. For instance, the door may be unlocked or the engine of the vehicle may start.

Advantageously, the authenticator 25 may also check the distance and/or position of the access device 10 relative to the vehicle 20 thanks to the UWB transmitter 23. The authenticator 25 may be configured to deny the access request if the access device 10 is located outside a predefined area. For example, the access request may be authorized only when the access device 10 is located inside the vehicle 20 or located on the left side of the vehicle 20. The access request may also be authorized only if the distance between the access device 10 and user interface 21 which was triggered by the user is less than a preset threshold.

Preferably, at the end of the access request, the UWB transmitters 23 and 13 are stopped.

The vehicle is configured to accept only one UWB session established with one-time UWB MAC address end to reject any further attempt to establish new UWB sessions using this one-time UWB MAC address.

Once the pairing has been made, the user can securely access the vehicle without any manual action the access device 10. The user just has to trigger the user interface 21 of the vehicle to get access to the vehicle.

According to the invention, the UWB transmitters are mostly off and do not consume energy. Similarly the transmitter 22 of the vehicle is mostly off and does not consume energy. Consequently, the invention allows a long autonomy of both the vehicle and the access device.

Since the UWB MAC address is different each time an access request is sent, the use of the vehicle cannot be tracked by third party. Hence privacy of the user is protected.

The invention allows to prevent certain uses of the vehicle when the user is located at a distance/position too far from the vehicle. Thus the triggering of the system allowing a car to park automatically can be inhibited as long as the user is not located within x meters of the car.

The invention allows pairing several vehicles in a single access device. It also allows pairing a single vehicle with several access devices.

The architectures of the tamper-proof device and the vehicle shown at Figures 1 are provided as examples only. These architectures may be different.

Since symmetric keys Ka and Kb involved in the process of access request are digital, they may be transferred to another access device.

The secure element of the access device may stores additional elements related to the user like the driving license or the vehicle insurance document.

## Claims

1. A method for accessing a vehicle (20) comprising a user interface (21), **characterized in that** the method comprises the steps of:
- in response to triggering of the user interface (21), a transmitter (22) comprised in the vehicle starts broadcasting a signal comprising a one-time UWB MAC address enciphered with a first key (Kb) and a first UWB transmitter (23) starts,
- upon detection of said signal, an access device (10) deciphers the one-time UWB MAC address using said first key (Kb) and starts a second UWB transmitter (13) comprised in the access device, then the second UWB transmitter establishes a UWB session with the first UWB transmitter using the one-time UWB MAC address,
- then the second UWB transmitter (13) sends to the first UWB transmitter (23) an access request comprising an access token computed from a second key (Ka), the vehicle checks the received access token is genuine by using said second key and only in case of successful checking access to the vehicle is authorized.

2. The method according to claim 1, wherein the vehicle evaluates a position of the access device relative to the vehicle using said first UWB transmitter (23) and wherein access to the vehicle is authorized only if said position is located in a predefined area.

3. The method according to claim 1 or 2, wherein the method comprises the previous steps of:
- switching both the access device and the vehicle in pairing mode,
- establishing an initial UWB session between the access device and the vehicle and sending an authentication message comprising a certificate from the access device to the vehicle through the initial UWB session,
- upon receipt of the authentication message, the vehicle checks that the certificate is genuine,
- the vehicle evaluates the difference between the positions of the access device and the vehicle,
- the vehicle sends a populating message comprising said first and second key (Ka, Kb) in response to the authentication message only if said difference is less than a predefined threshold and if the certificate is genuine.

4. The method according to claim 3, wherein the certificate comprises a validity date and wherein the vehicle associates the validity date to said first and second key (Ka, Kb).

5. The method according to claim 3, wherein the method comprises the preliminary steps of:
- providing the access device with an identifier (VID) of the vehicle and an asymmetric key pair,
- sending from the access device to a server (70) a certificate request comprising said identifier (VID) and a credentials based on the asymmetric key pair,
- checking the validity of the credentials on server side and sending the certificate in response to the certificate request only in case of successful credentials checking.

6. A vehicle (20) comprising a user interface (21) **characterized in that** the vehicle comprises a first transmitter (22), a UWB transmitter (23) and an authenticator (25) configured to provide the first transmitter with a one-time UWB mac address enciphered with a first key (Kb),
**in that**, following an activation of the user interface (21), the vehicle is configured to start said UWB transmitter (23) and to cause the first transmitter (22) to start broadcasting a signal comprising the enciphered one-time UWB MAC address,
**in that** said UWB transmitter (23) is configured to receive through a UWB session established with said one-time UWB MAC address an access request comprising an access token computed from a second key (Ka),
**in that** said authenticator is configured to check the received access token is genuine by using said second key and to authorize access to the vehicle only in case of successful checking.

7. The vehicle according to claim 6, wherein the vehicle is configured to evaluate a position of the access device relative to said vehicle using said UWB transmitter (23) and wherein the vehicle is configured to authorize access to said vehicle only if said position is located in a predefined area.

8. The vehicle according to claim 6 or 7, wherein the vehicle is configured to switch in pairing mode in response to a specific activation of the user interface (21), wherein the vehicle comprises a pairing unit (24),
in that upon receipt from an access device of an authentication message comprising a certificate through a UWB session established using an initial UWB MAC address, the pairing unit is configured to check that the certificate is genuine,
in that the vehicle is configured to evaluate the difference between the positions of the access device and the vehicle,
and in that the pairing unit is configured to send a populating message comprising said first and second key (Ka, Kb) in response to the authentication message only if said difference is less than a predefined threshold and if the certificate is genuine.

9. The vehicle according to claim 8, wherein the certificate comprises a validity date and wherein the pairing unit is configured to associate the validity date to said first and second key (Ka, Kb).

10. An access device (10) comprising a user interface (11) and able to control access to a vehicle (20),
**characterized in that** the access device comprises a low power transmitter (12), a UWB transmitter (13) and a secure element (30),
**in that** the secure element (30) stores first and second symmetric keys (Ka, Kb) and an unlocker agent (82) configured to get a signal received by the low power transmitter (12), to decipher a one-time UWB MAC address extracted from said signal using said first key (Kb), to cause the UWB transmitter (13) to establish a UWB session with a vehicle using the one-time UWB MAC address and to send an access request comprising an access token computed using said second key (Ka) through the UWB session.

11. The access device according to claim 10, wherein the access device is configured to switch in pairing mode and to start the low power transmitter (12) in response to an activation of the user interface (11),
wherein the secure element (30) comprises a pairing agent (81) which is configured to, upon receipt of a signal containing an initial UWB MAC Address, start the UWB transmitter and to cause the UWB transmitter (13) to establish an initial UWB session with a vehicle using the initial UWB MAC address and to send an Authentication message comprising a certificate through the initial UWB session and wherein the pairing agent (81) is configured to receive in response to the Authentication message a populating message comprising said first and second keys.

12. The access device according to claim 10 or 11, wherein the access device comprises a registering agent (83) configured to receive an identifier (VID) of the vehicle, to generate an asymmetric key pair and to send to a server (70) a certificate request comprising both said identifier (VID) and a credentials based on the asymmetric key pair, and wherein the registering agent is configured to receive, in response to the certificate request, a response message comprising a certificate and to associate said certificate to the identifier.
